# EUROPEAN PATENT APPLICATION

(11) **EP 4 080 645 A1**
(43) Date of publication of application: **26.10.2022**
(21) Application number: 21886582.2
(22) Date of filing: 28.09.2021
(51) Int. Cl.: H01M 10/637, H01M 10/6551, H01M 10/625

(54) **BATTERY MODULE, BATTERY PACK COMPRISING SAME BATTERY MODULE, AND VEHICLE COMPRISING SAME BATTERY PACK**

(30) Priority: 26.10.2020 KR 20200139759
(71) Applicant: LG Energy Solution, Ltd., Seoul 07335 (KR)
(72) Inventor: YOON, Doo-Han, Daejeon 34122 (KR); YANG, Jae-Hun, Daejeon 34122 (KR); LEE, Jung-Hoon, Daejeon 34122 (KR)
(74) Representative: Plasseraud IP
(86) International application number: PCT/KR2021/013274
(87) International publication number: WO 2022/092588

(57) **Abstract**

A battery module according to an embodiment of the present disclosure includes a plurality of battery cell assemblies each including at least one battery cell, a heat sink located at a bottom of the plurality of battery cell assemblies, and a coil resistor unit provided in the heat sink and connected to at least one of the plurality of battery cell assemblies.

## Description

### TECHNICAL FIELD

The present disclosure relates to a battery module, a battery pack including the battery module, and a vehicle including the battery pack.

The present application claims priority to Korean Patent Application No. 10-2020-0139759 filed on October 26, 2020 in the Republic of Korea, the disclosures of which are incorporated herein by reference.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage or charge/discharge capacity.

When a battery pack is configured by connecting a plurality of battery cells in series/parallel, a method of first configuring a battery module including at least one battery cell and adding other elements by using the at least one battery module to configure a battery pack is general.

A conventional battery pack includes battery modules including a plurality of battery cells. When an abnormal situation occurs due to the expansion of a battery cell in any one battery module, if the abnormal situation is not quickly dealt with, the abnormal situation may lead to thermal runaway to surrounding battery cells or battery modules, and may lead to the explosion of a battery module or a battery pack, thereby posing a great risk to the safety of a user.

Hence, when an abnormal situation occurs in a specific battery cell of a battery module, it is necessary to more quickly deal with the abnormal situation, and particularly, it is necessary to prevent thermal runaway and ensure safety in advance before the abnormal situation leads to thermal runaway to surrounding battery cells or battery modules and leads to the explosion or fire of a battery module or a battery pack.

### DISCLOSURE

### Technical Problem

Accordingly, an objective of the present disclosure is to provide a battery module capable of improving safety by preventing thermal runaway, a battery pack including the battery module, and a vehicle including the battery pack.

### Technical Solution

In an aspect of the present disclosure, there is provided a battery module including: a plurality of battery cell assemblies each including at least one battery cell; a heat sink located at a bottom of the plurality of battery cell assemblies; and a coil resistor unit provided in the heat sink and connected to at least one of the plurality of battery cell assemblies.

The coil resistor unit may be provided inside the heat sink.

The coil resistor unit may include: a coil resistive member connected to the at least one battery cell assembly; and a resistor case covering the coil resistive member and fixed to the heat sink.

The coil resistor unit may include coil holders provided on both sides of the coil resistive member, and connected to the resistor case.

The coil resistor unit may include a sealing member provided between the coil resistive member and the coil holder.

The resistor case may be formed of an insulating material.

The coil resistor unit may be provided outside the heat sink.

The coil resistor unit may be located between the heat sink and the plurality of battery cell assemblies, and may be fixed to a top of the heat sink.

In another aspect of the present disclosure, there is also provided a battery pack including: at least one battery module according to the above embodiments: and a pack case for packaging the at least one battery module.

In another aspect of the present disclosure, there is also provided a vehicle including at least one battery pack according to the above embodiments.

### Advantageous Effects

According to the above various embodiments, a battery module capable of improving safety by preventing thermal runaway, a battery pack including the battery module, and a vehicle including the battery pack may be provided.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a battery module, according to an embodiment of the present disclosure.
FIG. 2 is a view for describing main elements of the battery module of FIG. 1.
FIGS. 3 and 4 are views for describing a thermal runaway preventing mechanism of the battery module of FIG. 1.
FIG. 5 is a view for describing a battery module, according to another embodiment of the present disclosure.
FIG. 6 is a view for describing main elements of the battery module of FIG. 5.
FIGS. 7 and 8 are views for describing a thermal runaway preventing mechanism of the battery module of FIG. 5.
FIG. 9 is a view for describing a battery pack, according to an embodiment of the present disclosure.
FIG. 10 is a view for describing a vehicle, according to an embodiment of the present disclosure.

### BEST MODE

The present disclosure will now be described more fully with reference to the accompanying drawings, in which exemplary embodiments of the present disclosure are shown. These embodiments are provided so that the present disclosure will be thorough and complete, and will fully convey the concept of the present disclosure to one of ordinary skill in the art, and the present disclosure may be embodied in many different forms and should not be construed as being limited to the embodiments set forth herein. In addition, in order to help the understanding of the present disclosure, the accompanying drawings are not drawn to scale, but dimensions of some components may be exaggerated.

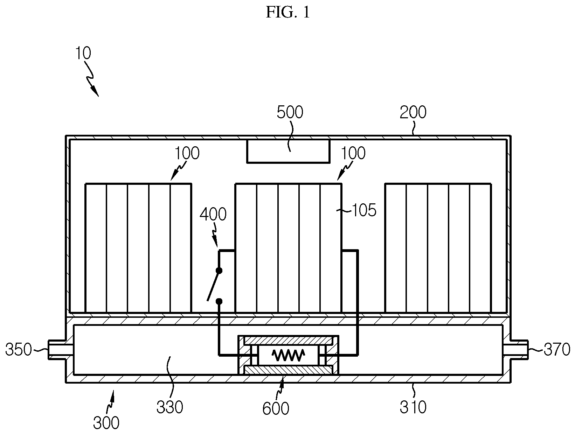

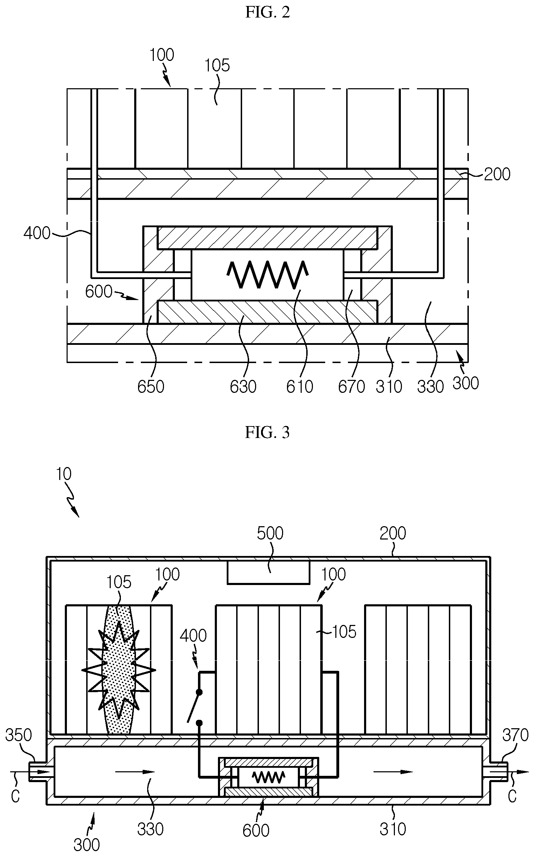

FIG. 1 is a view for describing a battery module, according to an embodiment of the present disclosure. FIG. 2 is a view for describing main elements of the battery module of FIG. 1.

Referring to FIGS. 1 and 2, a battery module 10 may include a battery cell assembly 100, a heat sink 300, and a coil resistor unit 600.

The battery cell assembly 100 may include at least one or more battery cells 105. The present embodiment will be described assuming that the battery cell assembly 100 includes a plurality of battery cells 105.

A plurality of battery cell assemblies 100 may be provided. The plurality of battery cell assemblies 100 may be provided inside a module case 200 described below, and may be spaced apart by a certain distance from one another.

The plurality of battery cells 105 that are secondary batteries may be pouch-type secondary batteries, prismatic secondary batteries, or cylindrical secondary batteries. The present embodiment will be described assuming that the plurality of battery cells 105 are pouch-type secondary batteries.

The battery module 10 may include the module case 200, a relay unit 400, and a battery management system (BMS) unit 500.

The module case 200 may accommodate therein the plurality of battery cell assemblies 100, the relay unit 400 described below, the BMS unit 500, and various electronic components of the battery module 10.

The heat sink 300 for cooling the plurality of battery cell assemblies 100 may be provided at the bottom of the plurality of battery cell assemblies 100. In detail, the heat sink 300 may be provided under the module case 200, and may contact a bottom surface of the module case 200.

The heat sink 300 may include a sink case 310, an inner passage 330, a cooling water inlet 350, and a cooling water outlet 370.

The sink case 310 may be provided under the module case 200, to contact the bottom surface of the module case 200. The inner passage 330 for the flow of cooling water C described below may be provided inside the sink case 310.

The inner passage 330 may be formed inside the sink case 310. The cooling water C for cooling the battery cell assembly 100 may flow through the inner passage 330.

The cooling water inlet 350 may communicate with the inner passage 330, and may be provided at a side of the sink case 310. The cooling water inlet 350 may be connected to an external cooling water unit, and may guide the cooling water C into the inner passage 330 of the heat sink 300.

The cooling water outlet 370 may communicate with the inner passage 330, and may be provided at the other side of the sink case 310. The cooling water outlet 370 may be connected to an external cooling water unit, and may discharge the cooling water C in the inner passage 330 to the outside of the heat sink 300.

The relay unit 400 for guiding an external short circuit when an abnormal situation such as overheating of the battery cells 100 of the battery cell assemblies 100 of the battery module 10 occurs may be connected to at least one of the battery cell assemblies 100.

The relay unit 400 may be connected to the coil resistor unit 600 described below and at least one of the battery cell assemblies 100. A switch of the relay unit 400 may be turned on when the abnormal situation occurs, to external short circuit the battery cell assembly 100 connected to the relay unit 400.

The BMS unit 500 for managing and controlling the battery module 10 may be provided in the module case 200. The BMS unit 500 may be electrically connected to the relay unit 400 descried below and various electronic components of the battery module 10.

The coil resistor unit 600 for the external short circuit may be connected to the relay unit 400 and may be provided in the heat sink 300. The coil resistor unit 600 may be provided in the inner passage 330 inside the heat sink 300.

The coil resistor unit 600 may be connected to at least one of the plurality of battery cell assemblies 100. For example, the coil resistor unit 600 may be connected to a middle battery cell assembly 100 located between both outermost sides, from among the plurality of battery cell assemblies 100.

The coil resistor unit 600 may include a coil resistive member 610, a resistor case 630, coil holders 650, and a sealing member 670.

The coil resistive member 610 may be connected to the relay unit 400 and may be connected to at least one battery cell assembly 100. When a switch of the relay unit 400 is turned on, the coil resistive member 610 may lower a state of charge (SOC) of the battery cell assembly 100 connected to the relay unit 400 to about 10% or less.

The resistor case 630 may cover the coil resistive member 610, and may be fixed to the heat sink 300. In detail, the resistor case 630 may be fixed in the inner passage 330 of the heat sink 300. The resistor case 630 may be formed of an insulating material.

The coil holders 650 may be provided on both sides of the coil resistive member 610, and may be connected to the resistor case 630. The relay unit 400 may pass through the coil holder 650, so that the relay unit 400 is connected to the coil resistive member 610.

The sealing member 670 for sealing the coil resistive member 610 may be provided between the coil resistive member 610 and the coil holder 650. The sealing member 670 may improve a sealing force of the coil resistive member 610 in the resistor case 630.

A thermal runaway preventing mechanism of the battery module 10 according to the present embodiment will be described in more detail.

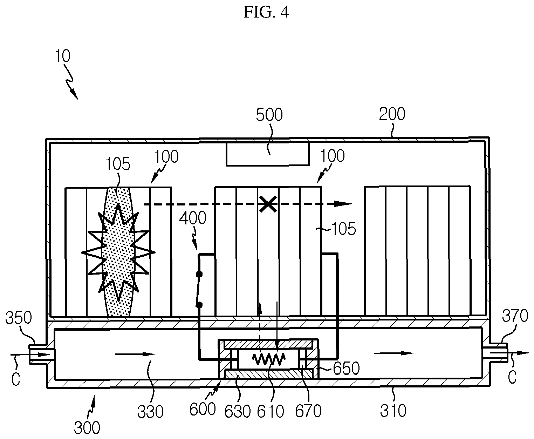

FIGS. 3 and 4 are views for describing a thermal runaway preventing mechanism of the battery module of FIG. 1.

Referring to FIGS. 3 and 4, in the battery module 10, overheat or thermal runaway may occur due to an abnormal situation of at least one of the battery cells 105 of the battery cell assembly 100. For example, an abnormal situation may occur due to overheating of a battery cell 105 of the left battery cell assembly 100 in FIG. 3.

In this case, a switch of the relay unit 400 may be turned on through active control such as control by the BMS unit 500 or an operation of a temperature sensor or through passive control at a preset temperature or higher.

Accordingly, in the battery module 10, in the case that the battery cell assembly 100 is connected to the relay unit 400, a closed circuit may be formed with the coil resistor unit 600, thereby reducing energy through external short circuit.

In detail, when an abnormal situation occurs in the battery module 100, the relay unit 400 may start energy drain of the middle battery cell assembly 100 (middle battery cell assembly 100 connected to the relay unit 400 in FIGS. 3 and 4) by forming a closed circuit with the coil resistor unit 600.The energy drain may be performed until an SOC(State Of Charge) is between 0% and 10% to reliably prevent heat propagation.

When the energy drain is performed, a temperature of the coil resistor unit 600 itself may be increased. The increased temperature of the coil resistor unit 600 may lead to degradation in the energy drain performance.

In the present embodiment, because the coil resistor unit 600 is located in the inner passage 330 of the heat sink 300, even when the energy drain is performed, the coil resistor unit 600 may be continuously cooled by the cooling water C passing through the inner passage 330.

Accordingly, in the present embodiment, when the energy drain is performed, an excessive temperature rise of the coil resistor unit 600 may be prevented, and a temperature of the coil resistor unit 600 may be effectively maintained or lowered in an appropriate range.

Hence, in the present embodiment, because the coil resistor unit 600 is cooled through the heat sink 300 during the energy drain, the energy drain performance may be effectively maintained during the external short circuit.

In the present embodiment, through the energy drain of the coil resistor unit 600, even when an abnormal situation occurs due to overheating of any one of the battery cell assemblies 100, thermal runaway to surrounding battery cell assemblies 100 may be effectively prevented.

Accordingly, in the present embodiment, when thermal runaway of any one of the battery cell assemblies 100 occurs, through external short circuit by the relay unit 400 and the coil resistor unit 600, heat propagation to surrounding battery cell assemblies 100 may be blocked and a greater risk of the thermal runaway to the battery module 10 may be more fundamentally prevented.

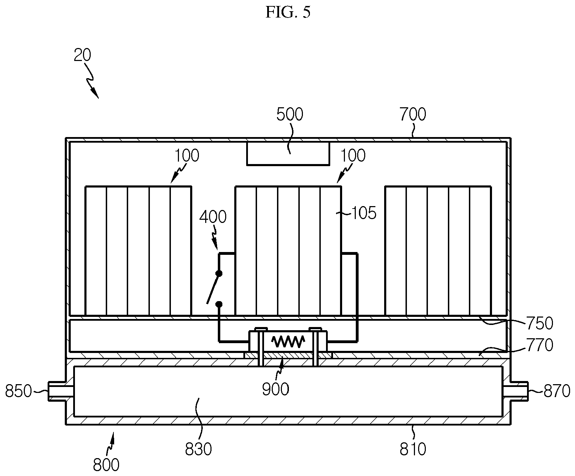

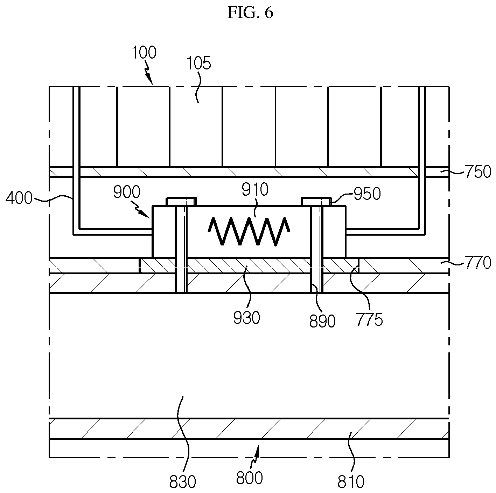

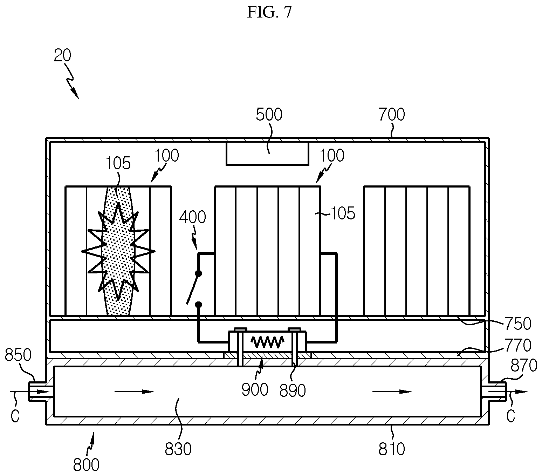

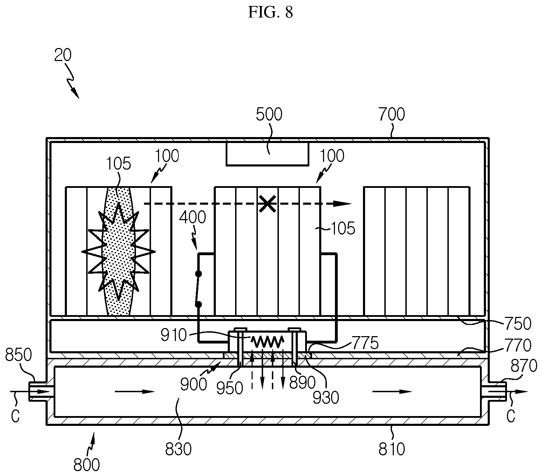

FIG. 5 is a view for describing a battery module, according to another embodiment of the present disclosure. FIG. 6 is a view for describing main elements of the battery module of FIG. 5. FIGS. 7 and 8 are views for describing a thermal runaway preventing mechanism of the battery module of FIG. 5.

A battery module 20 according to the present embodiment is similar to the battery module 10 of the above embodiment, and thus, a repeated description of elements which are substantially the same as or similar to those in the above embodiment will be omitted and a difference from the above embodiment will be mainly described.

Referring to FIGS. 5 through 8, the battery module 20 may include the battery cell assembly 100, the relay unit 400, the BMS unit 500, a module case 700, a heat sink 800, and a coil resistor unit 900.

The battery cell assembly 100, the relay unit 400, and the BSM unit 500 are substantially the same as or similar to those in the above embodiment, and thus, a repeated description will be omitted.

The module case 700 may include a battery support portion 750 and a resistor receiving portion 770.

The battery support portion 750 may support the battery cell assemblies 100. To this end, a support space for supporting the battery cell assemblies 100 may be provided in the battery support portion 750.

The resistor receiver 770 may be provided under the battery support portion 750, and may be located over the heat sink 800. The coil resistor unit 900 described below may be accommodated in the resistor receiving portion 770.

A heat transfer member hole 775 may be provided in the resistor receiving portion 770. A heat transfer member 930 of the coil resistor unit 900 described below may be inserted into the heat transfer member hole 775.

The heat sink 800 may include a sink case 810, an inner passage 830, a cooling water inlet 850, a cooling water outlet 870, and a fastening hole 890.

The sink case 810, the inner passage 830, the cooling water inlet 850, and the cooling water outlet 870 are respectively similar to those in the above embodiment, and thus, a repeated description will be omitted.

The fastening hole 890 may be provided at the top of the sink case 810. A fastening member 950 of the coil resistor unit 900 described below may be fastened into the fastening hole 890 by using a fastening method such as a screw.

The coil resistor unit 900 may be provided outside the heat sink 800. As shown in FIGS. 7 and 8, the coil resistor unit 900 may external short circuit the battery cell assembly 100 connected to the relay unit 400 in an abnormal situation, like the coil resistor unit 600.

The coil resistor unit 900 may be located between the heat sink 800 and the plurality of battery cell assemblies 100, and may be fixed to the top of the heat sink 800.

The coil resistor unit 900 may include a coil resistive member 910, the heat transfer member 930, and the fastening member 950.

The coil resistive member 910 may be located over the heat sink 800, and may be provided in the resistor receiving portion 770 of the module case 700.

The heat transfer member 930 may include a heat transfer material, and may be located between the coil resistive member 910 and the heat sink 800. In detail, the heat transfer member 930 may be inserted into the heat transfer member hole 775 of the resistor receiving portion 770. Accordingly, the heat transfer member 930 may contact the coil resistive member 910 and the heat sink 800, thereby further improving heat transfer efficiency.

The fastening member 950 for fixing the coil resistor unit 900 to the heat sink 800 may pass through the coil resistive member 910 and the heat transfer member 930 and may be fastened into the fastening hole 890 of the heat sink 800 by using a screw or the like.

In the present embodiment, because the coil resistor unit 900 contacts a top surface of the sink case 810 outside the heat sink 800, not in the inner passage 830 through which the cooling water C of the heat sink 800 flows, risk factors such as electrical problems which may be caused by a collision between the cooling water C and the coil resistor unit 900 may be further reliably prevented.

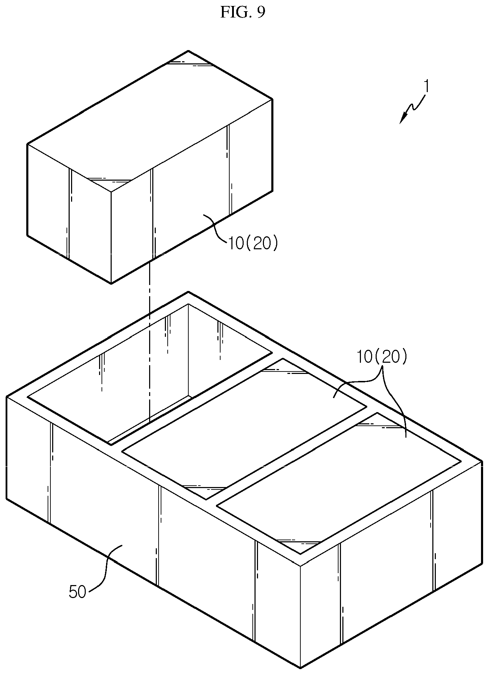

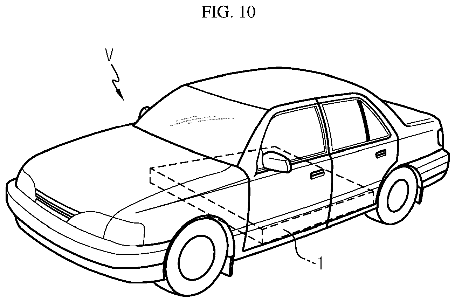

FIG. 9 is a view for describing a battery pack, according to an embodiment of the present disclosure. FIG. 10 is a view for describing a vehicle, according to an embodiment of the present disclosure.

Referring to FIGS. 9 and 10, a battery pack 1 may include at least one battery module 10, 20 according to the above embodiment and a pack case 50 for packaging the at least one battery module 10, 20 according to the above embodiment.

The battery pack 1 may be provided in a vehicle V as a fuel source of the vehicle. For example, the battery pack 1 may be provided in the vehicle V such as an electric vehicle, a hybrid vehicle, or another type of vehicle which may use the battery pack 1 as a fuel source.

Also, the battery pack 1 may be provided in another device, mechanism, or equipment such as an energy storage system using a secondary battery, in addition to the vehicle V.

As such, because the battery pack 1 and the device, mechanism, or equipment including the battery pack 1 such as the vehicle V according to the present embodiment include the battery module 10, 20, the battery pack 1 and the device, mechanism, or equipment including the battery pack 1 such as the vehicle V having all of the advantages of the battery module 10, 20 may be implemented.

According to the above various embodiments, the battery module 10, 20 capable of improving safety by preventing thermal runaway, the battery pack 1 including the battery module 10, 20, and the vehicle V including the battery pack 1 may be provided.

While the preferred embodiments of the present disclosure have been shown and described, the present disclosure is not limited to the specific embodiments described above, various modifications may be made by one of ordinary skill in the art to which the present disclosure pertains without departing from the gist of the present disclosure as defined by the claims, and these modifications should not be individually understood from the technical feature or prospect of the present disclosure.

## Claims

1. A battery module comprising:
a plurality of battery cell assemblies each comprising at least one battery cell;
a heat sink located at a bottom of the plurality of battery cell assemblies; and
a coil resistor unit provided in the heat sink and connected to at least one of the plurality of battery cell assemblies.

2. The battery module of claim 1, wherein the coil resistor unit is provided inside the heat sink.

3. The battery module of claim 2, wherein the coil resistor unit comprises:
a coil resistive member connected to the at least one battery cell assembly; and
a resistor case covering the coil resistive member and fixed to the heat sink.

4. The battery module of claim 3, wherein the coil resistor unit comprises coil holders provided on both sides of the coil resistive member, and connected to the resistor case.

5. The battery module of claim 4, wherein the coil resistor unit comprises a sealing member provided between the coil resistive member and the coil holder.

6. The battery module of claim 3, wherein the resistor case is formed of an insulating material.

7. The battery module of claim 1, wherein the coil resistor unit is provided outside the heat sink.

8. The battery module of claim 7, wherein the coil resistor unit is located between the heat sink and the plurality of battery cell assemblies, and is fixed to a top of the heat sink.

9. A battery pack comprising:
at least one battery module according to claim 1; and
a pack case for packaging the at least one battery module.

10. A vehicle comprising at least one battery pack according to claim 9.
